# EUROPÄISCHE PATENTSCHRIFT

(11) **EP 0 678 971 B1**
(45) Veröffentlichungstag und Bekanntmachung des Hinweises auf die Patenterteilung: **20.10.1999**
(21) Anmeldenummer: 95104877.6
(22) Anmeldetag: 01.04.1995
(51) Int. Cl.: H02P 6/00

(54) **Verfahren zur Umkehr der Drehrichtung eines bürstenlosen Gleichstrommotors aus vollem Lauf und bürstenloser Gleichstrommotor**
Method of reversing the direction of rotation for a brushless DC motor from full speed and brushless DC motor
Méthode pour inverser la direction de rotation pour un moteur CC sans balai à plan régime et moteur CC sans balai

(30) Priorität: 19.04.1994 DE 4413507
(43) Veröffentlichungstag der Anmeldung: 25.10.1995
(73) Patentinhaber: ALCATEL, 75008 Paris (FR)
(72) Erfinder: Moser, Dieter, D-79848 Bonndorf (DE)
(74) Vertreter: Schätzle, Albin, Dipl.-Phys.

(56) Entgegenhaltungen:
- EP-A- 0 090 423
- DE-A- 3 227 706
- NAECON 1986, Bd. 1, 19. - 23.Mai 1986 Seiten 32320-325, M.A. EL-SHARKAWI ET AL 'MICROCOMPUTER CONTROL OF AN ELECTRONICALLY COMMUTATED DC MOTOR'

## Beschreibung

Die Erfindung betrifft ein Verfahren zur Umkehr der Drehrichtung eines bürstenlosen Gleichstrommotors aus vollem Lauf und einem bürstenlosen Gleichstromotor gemäß den Oberbegriffen der Ansprüche 1 und 2.

Ein bürstenloser Gleichstrommotor mit einem Einquadrantenregler mit umschaltbarer Drehrichtung ist aus der Druckschrift:"Regelelektronik BGE 2406, Betriebsanleitung" der Anmelderin bekannt. Diese bürstenlosen Gleichstrommotoren werden für Anwendungsfälle eingesetzt, bei denen es erforderlich ist, eine Drehrichtungsumkehr möglichst rasch vorzunehmen. Wenn man bei dem bekannten Gleichstrommotor die Drehrichtung in vollem Lauf umschalten würde, dann würden sehr hohe Motorströme auftreten, welche etwa dem doppelten Anlaufstrom entsprechen können. Würde andererseits der Strom begrenzt, könnte Energie in den Drehzahlregler zurückgespeist werden, welches zu dessen Zerstörung führen kann. Um dies zu vermeiden, ist es üblich, den Motor bis zum Stillstand auslaufen zu lassen.

Weiterhin ist ein Gleichstrommotor aus der DE-A-32 27 706 bekannt, bei dem durch Optimierung der Kommutierungspunkte beim Umschalten der Drehrichtung bis zur Drehzahl 0 ein möglichst hohes Bremsmoment und danach durch eine weitere Optimierung ein möglichst hohes Beschleunigungsmoment erzeugt wird. Beim Bremsen liegt die induzierte Spannung in Reihe mit der angelegten Batteriespannung. Bei voller Drehzahl wird etwa die doppelte Batteriespannung erreicht und es entstehen starke Ströme, welche etwa dem doppelten Anlaufstrom entsprechen. Die Ströme können ebenfalls Zerstörungen verursachen oder müssen durch entsprechende Überdimensionierung der Schaltung kompensiert werden. Nachteilig ist darüberhinaus der erhebliche Schaltungsaufwand, der dadurch verursacht ist, daß ein Drehrichtungs-Ist-Signal und ein Drehrichtungs-Soll-Signal sowie ein Winkelstellungs-Signal eine Auswahlschaltung beaufschlagen, welche zwischen vier verschiedenen Kommutierungssequenzen, nämlich - Linkslauf,- Rechtslauf, - Bremsen aus Drehrichtung links und - Bremsen aus Drehrichtung rechts, umschaltet.

Das der Erfindung zugrunde liegende technische Problem besteht darin, ein Verfahren anzugeben, mit dem auf einfache Weise die Drehrichtungsumkehr eines bürstenlosen Gleichstrommotors in einer kurzen Zeit ausgeführt werden kann, ohne besonders starke Ströme zu erzeugen und ohne hohe Energie zurückzuspeisen. Dieses technische Problem ist erfindungsgemäß durch die kennzeichnenden Merkmale des Anspruchs 1 gelöst.

Dieses Verfahren kann bei einem bürstenlosen Gleichstrommotor mit einer eine Ansteuerlogik enthaltenden elektronischen Kommutierungsschaltung, bei dem ein Drehgeber mit dem Motor gekoppelt ist und der Ausgang des Drehgebers mit einem Spannungswandler und dieser mit einem Drehzahlregler verbunden ist, durch folgende Merkmale verwirklicht werden:
a) der Ausgang des Spannungswandlers ist mit einem Komparator verbunden,
b) der Ausgang des Komparators ist mit einem elektronischen Umschalter verbunden,
c) der Drehrichtungsumschalter ist mit einem Flankendetektor verbunden,
d) der Ausgang des Flankendetektors ist mit dem elektronischen Umschalter verbunden,
e) der Ausgang des elektronischen Umschalters ist mit der Ansteuerlogik verbunden.

Bei dem vorgeschlagenen Verfahren und mit dem vorgeschlagenen bürstenlosen Gleichstrommotor kann die Drehrichtungsumkehr zu jedem Zeitpunkt eingeleitet werden, ohne daß die Gefahr einer Beschädigung besteht und außerdem erfolgt die Drehrichtungsumkehr rascher als bisher.

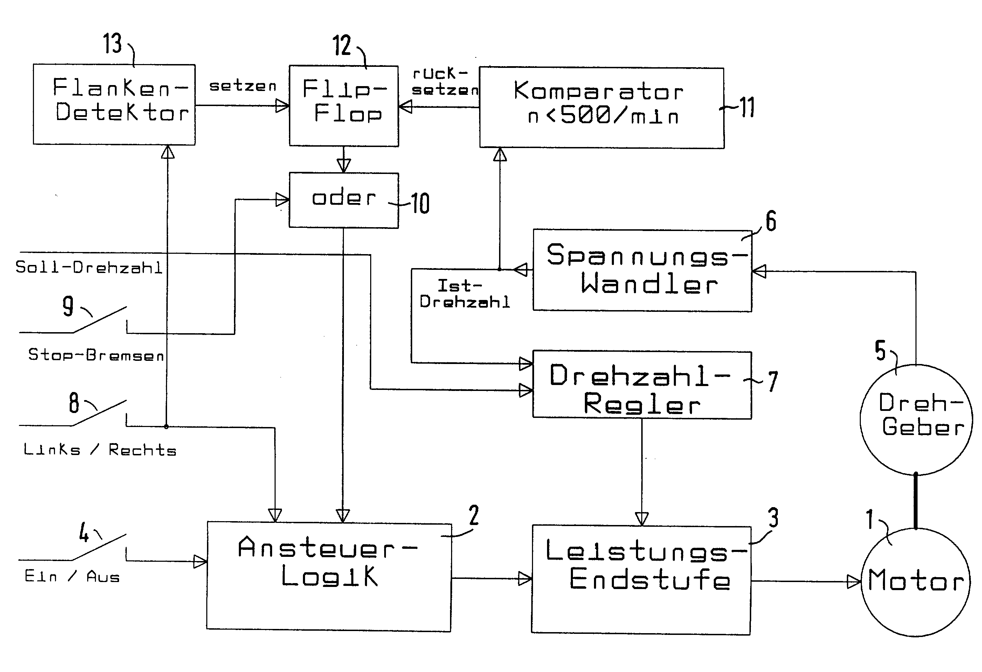

Die Erfindung ist nachstehend anhand der Figur erläutert. Der bürstenlose Gleichstrommotor besteht aus dem Motor 1 sowie der Ansteuerlogik 2 und der Leistungsendstufe 3. Die Gleichspannungsversorgung des bürstenlosen Gleichstrommotors wird mit dem Schalter 4 ein- und ausgeschaltet. Mit dem Läufer des Motors 1 ist der Drehgeber 5 gekoppelt, welcher ein inkrementaler Drehgeber oder ein Tachogenerator sein kann. Wenn der Drehgeber 5 ein inkrementaler Drehgeber ist, welcher eine der Drehzahl entsprechende Impulsfolge liefert, ist der Spannungswandler 6 ein Frequenz-Spannungswandler, welcher eine der Drehzahl proportionale Gleichspannung liefert, welche im Drehzahl-Regler 7 mit einer der Solldrehzahl entsprechenden Gleichspannung verglichen wird und aus dem Vergleich ggf. eine Regelgröße erzeugt wird.

Wenn der Drehgeber 5 ein Tachogenerator ist, welcher eine der Drehzahl des Motors 1 proportionale Spannung liefert, dann ist der Spannungswandler 6 beispielsweise ein Spannungsteiler, welcher die Tachospannung auf einem Bereich U = o bis 10 V normiert. Die Solldrehzahl kann vom Anwender des Motors von außen durch eine entsprechende Gleichspannung vorgegeben werden. Beispielsweise entspricht die Spannung U = 10 V der maximalen Solldrehzahl. Im einfachsten Fall ist der Sollwertgeber der Abgriff eines Potentiometers, welches an einer Gleichspannung von 10 V liegt.

Mit dem Drehrichtungsumschalter 8 (Links/Rechts) wird die Drehrichtung des Motors 1 beispielsweise in der Weise gesteuert, daß der Motor bei geschlossenem Drehrichtungsumschalter 8 rechts und bei geöffnetem Drehrichtungsumschalter 8 links dreht. Die Ansteuerlogik 2 steuert die Leistungsendstufe 3 in Abhängigkeit von der Stellung der Schalter 4, 8 und 9 sowie des Umschalters 10, dh. sie veranlaßt, daß die Leistungsendstufe 3 entweder gesperrt oder freigegeben wird, auf Kurzschlußbremsung schaltet oder zwischen Links- und Rechts lauf umschaltet.

Die der Istdrehzahl entsprechende Gleichspannung wird vom Spannungswandler 6 auch dem Komparator 11 zugeführt, welcher prüft, ob die Drehzahl höher oder niedriger als eine Vergleichsdrehzahl, z.B. 500 min⁻¹, ist. Außer dem Komparator 11 sind noch der elektronische Umschalter 12 (Flip-Flop) und der Flankendetektor 13 vorhanden. Der Flankendetektor wird vom Drehrichtungsschalter 8 (Rechts/Links) gesteuert. Der elektronische Schalter 12 (Flip-Flop) wird sowohl vom Flankendetektor 13 als auch vom Komparator 11 gesteuert. Der Umschalter 10 weist zwei Stellungen auf: entweder schaltet er den elektronischen Umschalter 12 oder den Schalter 9 zur Ansteuerlogik 2 durch. Durch Schließen des Schalters 9 wird die Kurzschlußbremsung des Motors manuell eingeleitet.

Die ggf. automatische Bremsung des Motors wird in folgender Weise verwirklicht:
Es sei angenommen, daß der Schalter 4 geschlossen ist und die Schalter 8 und 9 offen sind. In einem solchen Fall läuft der Motor linksdrehend. Soll die Drehrichtung des Motors umgekehrt werden, dann wird der Drehrichtungsumschalter 8 geschlossen. Dadurch wechselt das Potential am Schalterausgang von beispielsweise 0 V auf 12 V.

Diese Potentialänderung wird vom Flankendetektor 13 erkannt. Bei dem Flankendetektor 13 kann es sich um eine monostabile Kippschaltung handeln, welche auf eine Flanke getriggert in einen Arbeitzustand kippt und nach einer festgelegten Haltezeit in den Ausgangszustand zurückkippt.

Wenn der Flankendetektor 13 erkannt hat, daß die Drehrichtung gewechselt werden soll, dann gibt er einen kurzen Impuls aus, welcher den elektronischen Umschalter 12 derart schaltet, daß der Komparator 11 über den Umschalter 10 an die Ansteuerlogik 2 geschaltet ist. Ist die Drehzahl höher als nₘᵢₙ= 500 min⁻¹, dann wird die Kurzschlußbremsung ausgelöst und so lange aufrecht erhalten, bis nₘᵢₙ unterschritten ist. Wenn das zutrifft, dann erzeugt der Komparator 11 ein Dauersignal, welches den elektronischen Schalter 12 zurückstellt und dadurch die Kurzschlußbremsung aufhebt.

Wenn beim Umschalter der Drehrichtung durch Betätigen des Drehrichtungsumschalters 8 die Drehzahl bereits kleiner als nₘᵢₙ ist, dann schaltet das Ausgangssignal des Komparators 11 den elektronischen Umschalter 12 direkt zurück, so daß der Setz-Impuls des Flankendetektors 13 keine Auswirkung hat. Die Ansteuerlogik 2 gibt in diesem Fall den Reversierbefehl direkt an die Leistungsendstufe 3 weiter, so daß die Drehrichtung des Motors ohne Verzögerung geändert wird.

Durch Betätigung des Schalters 9 wird auch der Umschalter 10 betätigt, wodurch eine manuelle Kurzschlußbremsung des Motors eingeleitet wird.

## Patentansprüche

1. Verfahren zur Umkehr der Drehrichtung eines bürstenlosen Gleichstrommotors aus vollem Lauf, welcher einen Einquadrantenregler mit umschaltbarer Drehrichtung besitzt, wobei nach dem Umschalten der Drehrichtung selbsttätig eine Bremsung des Motors durchgeführt wird, danach die Drehzahl des Motors geprüft und die Bremsung aufgehoben wird, wenn die Drehzahl einen Wert nₘᵢₙ nahe 0 min ⁻¹ erreicht hat,
**dadurch gekennzeichnet,**
daß ein Soll-Drehrichtungs-Flanken-Signal erzeugt wird, welches bei einer Drehzahl > nₘᵢₙ eine Kurzschlußbremsung des Motors auslöst.

2. Bürstenloser Gleichstrommotor mit einer eine Ansteuerlogik (2) enthaltenen elekronischen Kommutierungsschaltung, bei dem ein Drehgeber (5) mit dem Motor (1) gekoppelt ist und der Ausgang des Drehgebers (5) mit einem Spannungswandler (6) und dieser mit einem Drehzahlregler (7) verbunden ist,
gekennzeichnet durch folgende Merkmale:
a) der Ausgang des Spannungswandlers (6) ist mit einem Komparator (11) verbunden,
b) der Ausgang des Komparators (11) ist mit einem elektronischen Umschalter (12) verbunden,
c) der Drehrichtungsumschalter (8) ist mit einem Flankendetektor (13) verbunden,
d) der Ausgang des Flankendetektors (13) ist mit dem elektronischen Umschalter (12) verbunden,
e) der Ausgang des elektronischen Umschalters (12) ist mit der Ansteuerlogik (2) verbunden.

3. Bürstenloser Gleichstrommotor nach Anspruch 2, dadurch gekennzeichnet, daß zwischen dem elekronischen Umschalter (12) und der Ansteuerlogik (2) ein Umschalter (10) vorgesehen ist.

## Claims

1. Method of reversing the direction of rotation of a brushless direct-current motor from full speed, which has a one-quadrant controller with reversible direction of rotation, in which method a braking of the motor is carried out automatically after reversing the direction of rotation, then the rotational speed of the motor is checked and the braking is discontinued if the rotational speed has reached a value nₘᵢₙ close to 0 min⁻¹, characterized in that a required direction of rotation edge signal is generated which triggers a short-circuit braking of the motor at a rotational speed > nₘᵢₙ.

2. Brushless direct-current motor having an electronic commutation circuit containing a triggering logic (2), in which motor a rotary transducer (5) is coupled to the motor (1) and the output of the rotary transducer (5) is connected to a voltage transformer (6) and the latter is connected to a rotational-speed controller (7),
characterized by the following features:
a) the output of the voltage transformer (6) is connected to a comparator (11),
b) the output of the comparator (11) is connected to an electronic changeover switch (12),
c) the direction of rotation changeover switch (8) is connected to an edge detector (13),
d) the output of the edge detector (13) is connected to the electronic changeover switch (12),
e) the output of the electronic changeover switch (12) is connected to the triggering logic (2).

3. Brushless direct-current motor according to Claim 2, characterized in that a changeover switch (10) is provided between the electronic changeover switch (12) and the triggering logic (2).

## Revendications

1. Procédé destiné à inverser en plein régime le sens de rotation d'un moteur à courant continu sans balai, qui est muni d'un régulateur à un quart de cercle avec un sens de rotation réversible, dans lequel procédé l'inversion du sens de rotation est automatiquement suivie par un freinage du moteur, à la suite duquel la vitesse de rotation du moteur est vérifiée et le freinage est supprimé lorsque la vitesse de rotation a atteint une vitesse nₘᵢₙ proche de 0 min⁻¹, caractérisé en ce que le circuit génère un signal de flancs d'impulsion du sens de rotation théorique, qui déclenche un freinage à court-circuit du moteur lorsque la vitesse de rotation est supérieure à nₘᵢₙ.

2. Moteur à courant continu sans balai comprenant un circuit de commutation électronique, qui comporte une logique de commande (2) et dans lequel un capteur de rotation (5) est couplé avec le moteur (1) et la sortie du capteur de rotation (5) est reliée à un transformateur de tension (6) et ce dernier est relié à un régulateur de vitesse (7), caractérisé par les caractéristiques suivantes :
a) la sortie du transformateur de tension (6) est reliée à un comparateur (11),
b) la sortie du comparateur (11) est reliée à un commutateur électronique (12)
c) le commutateur de sens de rotation (8) est relié à un détecteur de flancs d'impulsion (13),
d) la sortie du détecteur de flancs d'impulsion (13) est reliée au commutateur électronique (12),
e) la sortie du commutateur électronique (12) est reliée à la logique de commande (2).

3. Moteur à courant continu sans balai selon la revendication 2, caractérisé en ce qu'il est prévu de monter un commutateur (10) entre le commutateur électronique (12) et la logique de commande (2).
